Europäisches Patentamt

European Patent Office

Office européen des brevets

(19)

(11) Publication number : **0 508 685 A2**

# (12) EUROPEAN PATENT APPLICATION

(21) Application number : 92302925.0

(22) Date of filing : 02.04.92

(51) Int. Cl.⁵ : **G06F 1/26**

(30) Priority : **10.04.91 US 683357**
**11.04.91 US 684526**

(43) Date of publication of application :
**14.10.92 Bulletin 92/42**

(84) Designated Contracting States :
**DE FR GB**

(71) Applicant : **International Business Machines**
**Corporation**
**Old Orchard Road**
**Armonk, N.Y. 10504 (US)**

(72) Inventor : **Allard, David Joseph**
**3900 Greenfield Court**
**Boyton Beach, FL 33436 (US)**

Inventor : **Bigbie, Samuel Eugene**
**8188-B Thames Bl.**
**Boca Raton, FL 33433 (US)**
Inventor : **Chandra, Pramod**
**937 Banyan Drive**
**Delray Beach, FL 33483 (US)**
Inventor : **Deloye, Michael Joseph**
**2500 SW 10th Street**
**Boyton Beach, FL 33426 (US)**
Inventor : **Myers, Robert Lee**
**21555 Coronado Avenue**
**Boca Raton, FL 33433 (US)**

(74) Representative : **Blakemore, Frederick**
**Norman et al**
**IBM United Kingdom Limited Intellectual**
**Property Department Hursley Park**
**Winchester Hampshire SO21 2JN (GB)**

(54) **Power-on control system for a computer.**

(57) This invention relates to personal computers, and more particularly to unattended activation and operation of such personal computers through cooperation of power supplies for supplying electrical power to electrically operated components which manipulate or store digital data with options added to the personal computer. An operator is relieved of any necessity of leaving equipment in the power-on active state in order to have programs and tasks executed. Further, the option of this invention when added to a personal computer of the type described herein includes appropriate operative components for distinguishing between an operator directed power-on state and a program directed power-on state. Unattended activation and operation is also enabled of such personal computers through cooperation of power supplies for supplying electrical power to electrically operated components which manipulate or store digital data with a controlling network option card added to the personal computer in adapting it to the network environment. A system administrator is relieved of any necessity of leaving equipment in the power-on active state in order to have network resources available to client users.

Fig. 5

The invention relates to computers, and more particularly to control systems for computers.

Personal computer systems in general and IBM personal computers in particular have attained widespread use for providing computing capability to many segments of today's modern society. Personal computer systems can usually be defined as a desk top, floor standing, or portable microcomputer that consists of a system unit having a single system processor and associated volatile and non-volatile. memory, a display monitor, a keyboard, one or more. diskette drives, a fixed disk storage, and an optional printer. One of the distinguishing characteristics of these systems is the. use of a motherboard or system planar to electrically connect these components together. These systems are designed primarily to give independent computing capability to a single user and are inexpensively priced for purchase by individuals or small businesses. Examples of such personal computer systems are IBM's PERSONAL COMPUTER AT and IBM's PERSONAL SYSTEM/2 Models 25, 30, L40SX, 50, 55, 60, 65, 70, 80, 90 and 95.

Persons familiar with the operation and use of these systems will also be familiar with their use in what are known as local area networks, in which a number of personal computers are connected together for sharing of files and other resources. Certain forms of such networks are known as "client-server" computing environments, in that one or more particularly powerful systems ("servers"), potentially having greatly enlarged file storage capability, are connected with less powerful systems ("clients", sometimes known as LAN stations).

These systems can be classified into two general families. The first family, usually referred to as Family I Models, use a bus architecture exemplified by the IBM PERSONAL COMPUTER AT and other "IBM compatible" machines. The second family, referred to as Family II Models, use IBM's MICRO CHANNEL bus architecture exemplified by IBM's PERSONAL SYSTEM/2 Models 50 through 95. The Family I models typically have used the popular INTEL 8088 or 8086 microprocessor as the system processor. These processors have the ability to address one megabyte of memory. The Family II models typically use the high speed INTEL 80286, 80386, and 80486 microprocessors which can operate in a real mode to emulate the slower speed INTEL 8086 microprocessor or a protected mode which extends the addressing range from 1 megabyte to 4 Gigabytes for some models. In essence, the real mode feature of the 80286, 80386, and 80486 processors provide hardware compatibility with software written for the 8086 and 8088 microprocessors.

Electrical power for energizing the components of such personal computers is conventionally supplied by power supplies which use control logic, switching transistors, power transformers, rectifiers and filters to convert electrical power from an available line voltage and current, such as the 110 volt 60 hertz alternating current supplied in the United States, to the direct current voltages required for operation of the personal computer. It has been conventional to control operation of such power supplies by switching the alternating current supply voltage to the power supply. In the example given, such switching is accomplished by turning on and off the 110 volt 60 hertz mains supply current. As will be appreciated, such switching of the generally supplied service voltage requires switches which are at least somewhat substantial as compared to the significantly lower voltages and current typically used with the operating components of the personal computer.

The present invention provides a control system for a computer of a type having a power supply which includes a controllable component for activating and deactivating the computer by enabling and disabling the supply of electrical power thereto, the control system comprising: memory elements for storing information regarding an event on the occurrence of which the computer is to be activated and regarding functions to be performed by the computer while activated; and an activation controlling element operatively coupled with the memory elements and arranged to identify the occurrence of the event and, on identification thereof, to cause the controllable component to activate the computer, to initiate performance of the functions and, after completion of the functions to cause the controllable component to deactivate the computer.

The invention enables control over the active, power-on or deactivated, dormant, power-off state of a personal computer and the execution of defined tasks in selected circumstances. An operator is thus relieved of any necessity of leaving equipment in the power-on active state in order to have programs and tasks executed.

In one embodiment of the invention the event is the arrival of a predetermined time, the system including a clock coupled to the activation controlling element for registering the passage of time.

Many computer tasks which now must be performed manually by a user lend themselves well to automation. Examples are time intensive operations such as hard disk backup and time critical operations such as telefax message transmittal during off-peak hours. While programs have been developed to automate certain such tasks, the computer equipment used must be left in an active or power-on state for the programs to work. Should an operator fail to leave the equipment active, the task would fail.

Viewed from another aspect, the invention provides a computer for use with such a control system, the computer including means for ascertaining, on activation of the computer, whether the activation occurred by operation of the control system and means for querying the control system for stored instructions in the event that activation occurred by operation of the control system, the computer awaiting operator instructions if activation occurred other than by operation of the control system.

A computer which is used for automated computing tasks and for more usual operator directed tasks is thus enabled to distinguish between operator and programming initiated activation and task assignment. A personal computer of the type described hereinabove includes appropriate operative components for distinguishing between an operator directed power-on state and a program directed power-on state.

In a client-server computing environment, resources available only from or through the server will become unavailable to a client when the server is dormant, deactivated or powered-down. As one particular example, an operator seeking to use a particular network outside normal network availability hours would be restricted to resources (programs, files, printers/plotters, etc.) available solely at the individual workstation or client were the network server turned off as is often done for security reasons or to reduce running time and consequent need for service. While a server could conceivably be located and turned on, such systems are often located in places which are either inaccessible or unknown to an individual operator.

Accordingly, in another embodiment, the. control system is for a network server computer and the event is the arrival of a datagram addressing the server computer, the control system comprising an address decoder for recognising the receipt from the. network of a datagram addressing the server computer.

A client personal computer system is thus enabled to activate a server system as may be required in order to gain access to network resources under the control of the server. The maintenance and power consumption reduction advantages of turning off the server during periods of inactivity (such as normal network unavailability on a weekend, for example) are retained while opening the possibility of accessing network resources if needed during such an interval.

A network can be operated in such a manner that a client system may, by inquiry of its associated server, cause the server to awake from dormancy, acknowledge the client, and make network :resources available. The server functions in accordance with a method in which a call from a client is recognized by the dormant server, the server is activated and responds to the requests from the client, and the server is later again deactivated.

Embodiments of the invention will now be described, by way of example only, with reference to the accompanying drawing, wherein:

Figure 1 is a perspective view of a personal computer embodying this invention;

Figure 2 is an exploded perspective view of certain elements of the personal computer of Figure 1 including a chassis, a cover, an electromechanical direct access storage device and a planar board and illustrating certain relationships among those elements;

Figure 3 is a schematic view of certain components of the personal computer of Figures 1 and 2;

Figure 4 is a circuit diagram of certain power supply and control elements used in the computer of Figures 1 through 3;

Figure 5 is a schematic representation of certain elements used in an option card according to a first embodiment of the invention mounted in the computer of Figures 1 through 4;

Figure 6 is a flowchart of certain program steps executed by an operator in preparing a computer in accordance with this invention for unattended power-on, operation and power-off;

Figure 7 is a flowchart of certain steps executed by a computer in accordance with this invention in activating and operating while unattended; and

Figure 8 is a flowchart of certain steps executed by a computer in accordance with this invention when the computer is activated.

Figure 9 is a schematic representation of a network option card according to a second embodiment of the invention as incorporated in a network server computer.

While the present invention will be described more fully hereinafter with reference to the accompanying drawings, in which embodiments of the present invention are. shown, it is to be understood at the outset of the description which follows that persons of skill in the appropriate arts may modify the invention here described while still achieving the favorable results of this invention. Accordingly, the description which follows is to be understood as being a broad, teaching disclosure directed to persons of skill in the appropriate arts, and not as limiting upon the present invention.

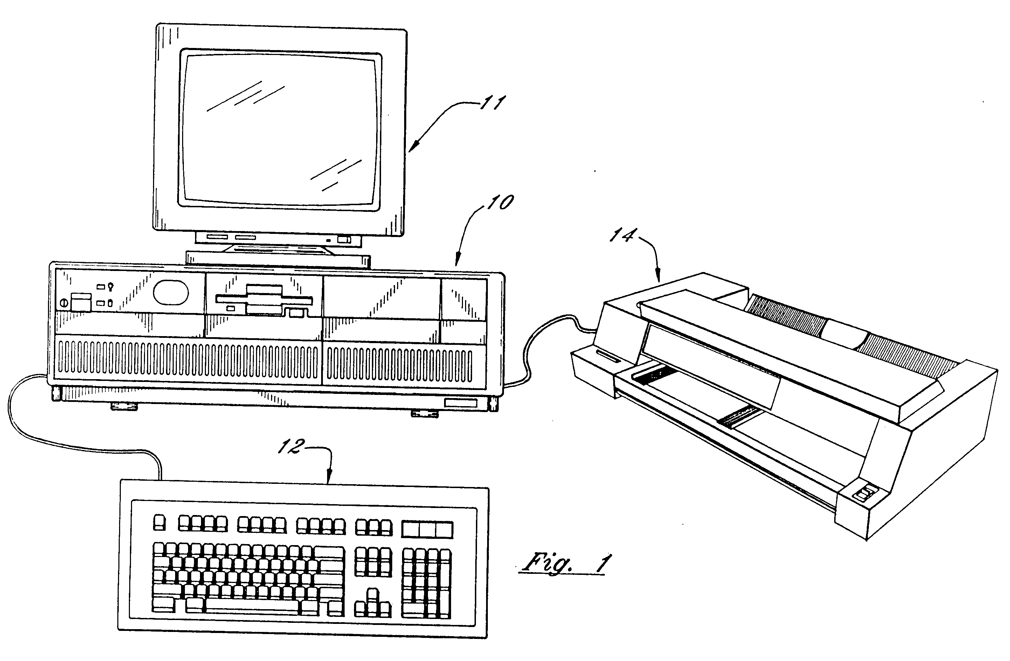

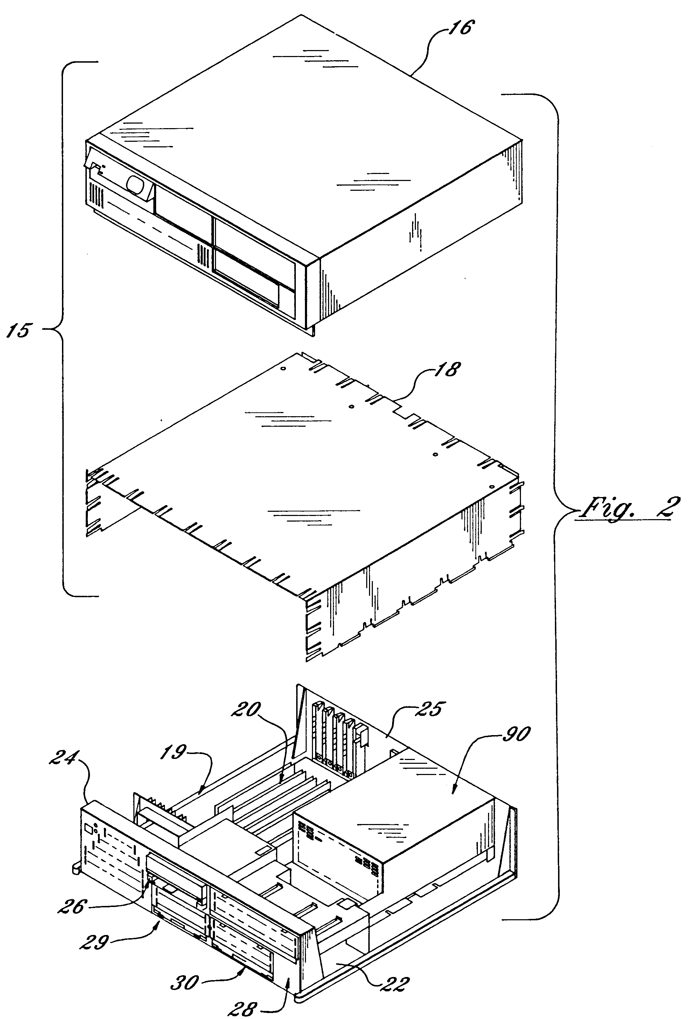

Referring now more particularly to the accompanying drawings, a microcomputer suitable for use with the present invention is there shown and generally indicated at 10 (Figure 1). As mentioned hereinabove, the computer 10 may have an associated monitor 11, keyboard 12 and printer or plotter 14. The computer 10 has a cover 15 formed by a decorative outer member 16 (Figure 2) and an inner shield member 18 which cooperate with a chassis 19 in defining an enclosed, shielded volume for receiving electrically powered data processing and storage components for processing and storing digital data. At least certain of these components are mounted on a planar 20 which is mounted on the chassis 19 and provides a means for electrically interconnecting the components of the computer 10 including those identified above and such other associated elements as floppy disk drives, various forms of direct access storage devices, accessory cards or boards, and the like.

The chassis 19 has a base indicated at 22, a front panel indicated at 24, and a rear panel indicated at 25 (Figure 2). The front panel 24 defines at least one open bay (and in the form illustrated, four bays) for receiving a data storage device such as a disk drive for magnetic or optical disks, a tape backup drive, or the like.. In the illustrated form, a pair of upper bays 26, 28 and a pair of lower bays 29, 30 are provided. The upper bays 26, 28 are adapted to receive peripheral drives of a first size (such as those known as 5.25 inch drives) while the lower bays are adapted to receive devices of another size (such as those known as 3.5 inch drives).

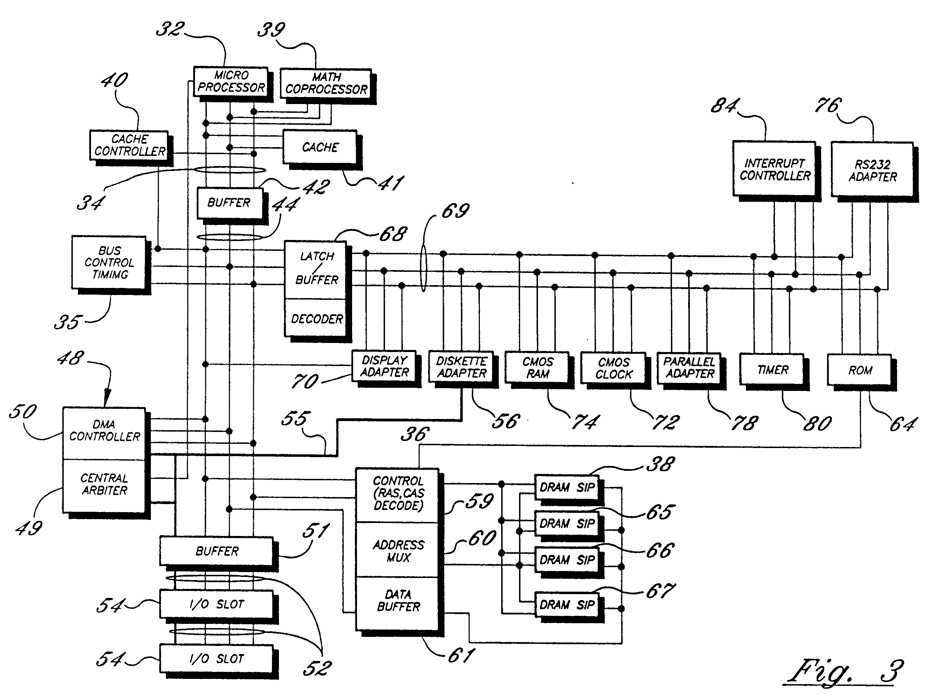

Prior to relating the above structure to the present invention, a summary of the operation in general of the personal computer system 10 may merit review. Referring to Figure 3, there is shown a block diagram of a personal computer system illustrating the various components of the computer system such as the system 10 in accordance with the present invention, including components mounted on the planar 20 and the connection of the planar to the I/O slots and other hardware of the personal computer system. Connected to the planar is the system processor 32 comprised of a microprocessor which is connected by a high speed CPU local bus 34 through a bus control timing unit 35 to a memory control unit 36 which is further connected to a volatile random access memory (RAM) 38. While any appropriate microprocessor can be used, one suitable microprocessor is the 80386 which is sold by INTEL.

While the present invention is described hereinafter with particular reference to the system block diagram of Figure 3, it is to be understood at the outset of the description which follows that it is contemplated that the apparatus and methods in accordance with the present invention may be used with other hardware configurations of the planar board. For example, the system processor could be an Intel 80286 or 80486 microprocessor and the system bus could be a Microchannel or AT type.

Returning now to Figure 3, the CPU local bus 34 (comprising data, address and control components) provides for the connection of the microprocessor 32, a math coprocessor 39, a cache controller 40, and a cache memory 41. Also coupled on the. CPU local bus 24 is a buffer 42. The buffer 42 is itself connected to a slower speed (compared to the CPU local bus) system bus 44, also comprising address, data and control components. The system bus 44 extends between the buffer 42 and a further buffer 51. The system bus 44 is further connected to a bus control and timing unit 35 and a DMA unit 48. The DMA unit 48 is comprised of a central arbitration unit 49 and DMA controller 50. The buffer 51 provides an interface between the system bus 44 and an optional feature bus such as the MICRO CHANNEL bus 52. Connected to the bus 52 are a plurality of I/O slots 54 for receiving MICRO CHANNEL option or adapter cards which may, for example, be further connected to an I/O device or memory. Examples of option cards which form an important portion of this invention will be described hereinafter.

An arbitration control bus 55 couples the DMA controller 50 and central arbitration unit 49 to the I/O slots 54 and a diskette adapter 56. Also connected to the system bus 44 is a memory control unit 36 which is comprised of a memory controller 59, an address multiplexor 60, and a data buffer 61. The memory control unit 36 is further connected to a random access memory as represented by the RAM module 38. The memory controller 36 includes the logic for mapping addresses to and from the microprocessor 32 to particular areas of RAM 38. This logic is used to reclaim RAM previously occupied by BIOS. Further generated by memory controller 36 is a ROM select signal (ROMSEL), that is used to enable or disable ROM 64.

While the microcomputer system 10 is shown with a basic 1 megabyte RAM module, it is understood that additional memory can be interconnected as represented in Figure 3 by the optional memory modules 65 through 67. For purposes of illustration only, the present invention is described with reference to the basic one megabyte memory module 38.

A further buffer 68 is coupled between the system bus 44 and a planar I/O bus 69. The planar I/O bus 69 includes address, data, and control components respectively. Coupled along the planar bus 69 are a variety of I/O adapters and other components such as the display adapter 70 (which is used to drive the monitor 11), a clock 72, nonvolatile RAM 74 herein after referred to as NVRAM, a RS232 adapter 76, a parallel adapter 78, a plurality of timers 80, a diskette adapter 56, an interrupt controller 84, and a read only memory 64. The read only memory 64 includes the BIOS that is used to interface between the I/O devices and the operating system of the microprocessor 32. BIOS stored in ROM 64 can be copied into RAM 38 to decrease the execution time of BIOS. ROM 64 is further responsive (via ROMSEL signal) to memory controller 36. If ROM 64 is enabled by memory controller 36, BIOS is executed out of ROM. If ROM 64 is disabled by memory controller 36, ROM is not responsive to address enquiries from the microprocessor 32 (i.e. BIOS is executed out of RAM).

The clock 72 is used for time of day calculations and the NVRAM is used to store system configuration data. That is, the NVRAM will contain values which describe the present configuration of the system. For example, NVRAM contains information describing the capacity of a fixed disk or diskette, the type of display, the amount of memory, time, date, etc. Of particular importance NVRAM will contain data (which can be one bit) which is used by memory controller 36 to determine whether BIOS is run out of ROM or RAM and whether to reclaim RAM intended to be used by BIOS RAM. Furthermore, these data are stored in NVRAM whenever a special configuration program, such as SET Configuration, is executed. The purpose of the SET Configuration program is to store values characterizing the configuration of the system to NVRAM.

There is also mounted within the shielded enclosure and associated with the above described components of the computer a power supply (indicated at 90 in Figure 2) for supplying electrical power to the components of the computer 10. Preferably, and as is generally known and applied in the field of personal computers, the power supply 90 is a pulse width modulation switching power supply for connection with an alternating current electrical main supply and for supplying direct current electrical power to the data processing and storage components for enabling operation thereof. Such power supplies have been described, for example, in "The Winn Rosch Hardware Bible", published by Brady of New York under a copyright date of 1989. As there described, power supplies of the switching type are more efficient and often less expensive than their linear kin. While designs vary, the typical switching supply first converts incoming 60 Hz utility power to a much higher frequency of pulses, in the range of 20 kHz. At the same time that the electrical current is increased in frequency, it is regulated by a digital technique known as pulse width modulation. The duration of each power pulse is varied in response to the needs of the computer circuitry being supplied. The width of the pulses is controlled by electronically switching the current flow on and off, hence the name of the technique. Such switching typically occurs in a special purpose chip designed for such a function and operating with a number of other circuit elements not here shown or described. Such description is omitted here because it is believed well known to persons of ordinary skill in the relevant arts. The pulses are reduced in voltage by a transformer and turned into pure direct current by rectification and filtering.

Switching power supplies earn their efficiency and lower cost in two ways: Switching regulation is more efficient because less power is turned into heat. Instead of dissipating energy, the switching regulator switches all current flow on and off. In addition, high frequencies require smaller, less expensive transformers and filtering circuits. Nearly all of today's personal computers use switching power supplies.

In conventional switching power supplies as described immediately above, control over whether any voltage is delivered to the operating components of the computer is exercised by turning the normal utility voltage supply on and off. In the United States, such utility mains typically supply 110 volt 60 Hz alternating electrical current. The dangers to a potential user, and the safety regulations imposed by such bodies as Underwriters Laboratories, are. well known to designers of personal computers.

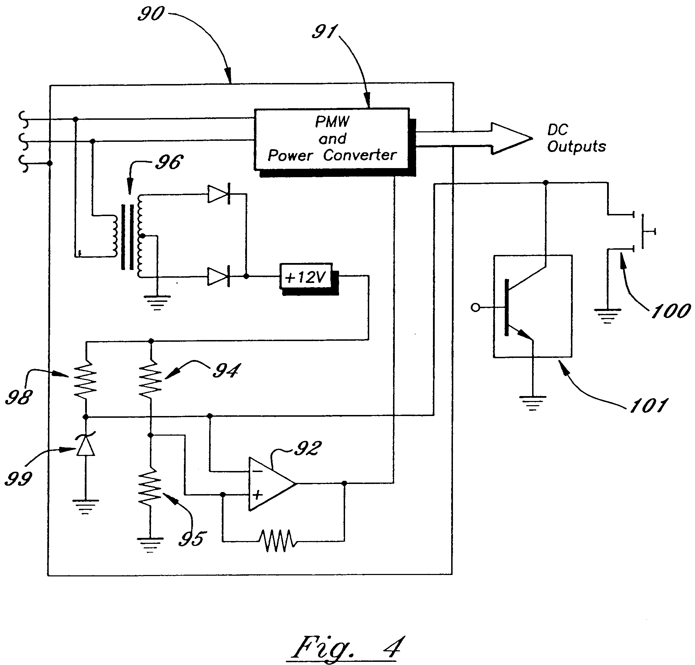

The power supply comprises a controllable component for responding to the presence and absence of a low voltage direct current electrical signal by enabling and disabling the supply of electrical power to the data processing and storage components by controlling the "on" or "off" state of the pulse width modulator, and a signal generator circuit operatively connected with the controllable component and with an alternating current electrical main supply for controllably deriving from the main supply a low voltage direct current signal for delivery to said controllable component. By reason of this interconnection, a user of the computer may control energization of the electrically powered data processing and storage components by controlling the application of a low voltage direct current signal from the signal generator circuit to the controllable component. In the illustrated embodiment, the controllable component is a pulse width modulator control circuit (described generally hereinabove and indicated at 91 in Figure 4) which may be of conventional form such as is available from Motorola as its SG1525A/1527A series of devices. The signal generator circuit comprises several elements, including a comparator 92 and first and second signal circuits for supplying signals to the comparator. The comparator 92 receives from a first signal circuit a low voltage direct current reference signal established by a voltage divider 94, 95 supplied with rectified current transformed from the main supply voltage by a suitable small transformer 96. The comparator 92 also receives a controlled low voltage enable/disable signal varying between a first voltage and a second, higher voltage. The enable/disable signal is established by a regulated voltage divider formed by a resistor 98 and an associated zener diode 99, to which is connected a current drain in the form of a switch device for grounding out the point of connection between the resistor and diode. The. switch device, which functions at a low, logic level voltage (typically 5 volts) as distinguished from the voltage of the main supply (typically on the order of 100 volts or more), may be in the form of a manually operable switch 100 or a computer logic operable switch 101. In either instance, operation of the switch 100 or 101 functions for selecting between the first and second voltages for the enable/disable signal. Responding to the change in voltage of signals applied, the comparator 92 either delivers a signal forward to a shutdown or inhibit pin of the control circuit 91 or does not deliver a signal and thereby controls the power delivered to the electrically powered data processing and storage components of the computer.

It is to be noted that the control occurs on the secondary, or output, side of the primary power transformer of the power supply, where the pulse width modulator component is connected, so that a user is isolated from dangerous voltages.

As will be appreciated, a user of the computer 10 may control the power on power off functions by manipulating the manual switch 100, and thereby use the computer while avoiding exposure to the higher voltages and currents typically supplied through the main electrical supply obtained from a power distribution company or utility.

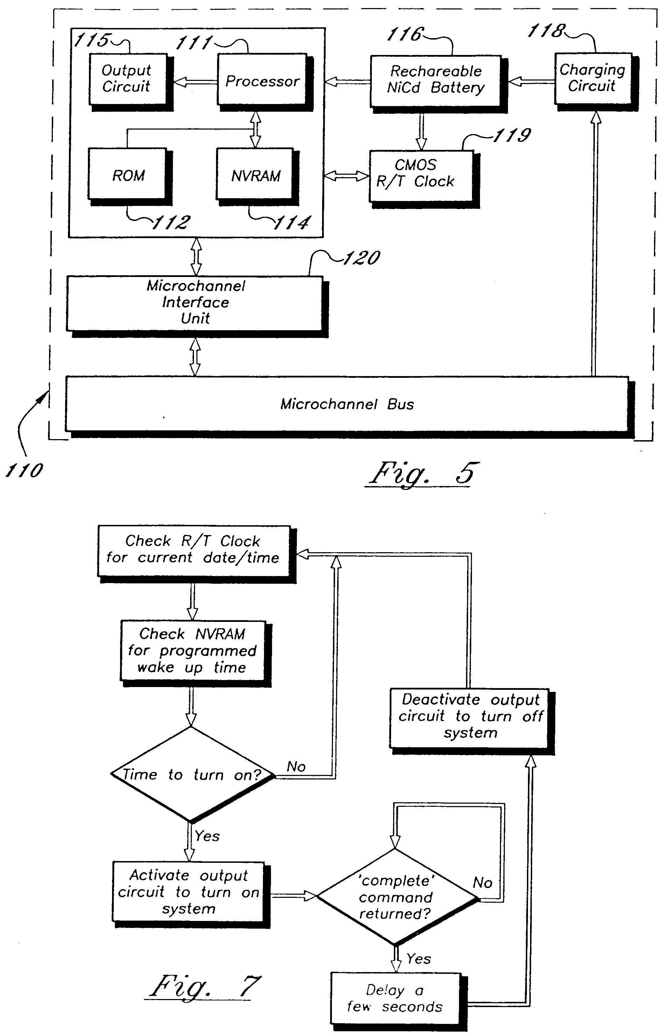

In a first embodiment of the invention the computer 10 may be activated to a power-on state, execute programs, and be restored to a deactivated, dormant power-off state all while unattended by an operator. This is accomplished through the provision of an option card mounted in one of the MICRO CHANNEL connectors or slots 54 as will now be described, and by operations as will be pointed out with reference to Figures 5 through 8.

Figure 5 illustrates a form of option card particularly designed for use with a MICRO CHANNEL personal computer. However, knowledgeable readers will understand from the description which here follows that the invention may also be embodied in option cards usable with the Family I or AT bus architecture. The option card 110, in a preferred form, bears an 8 bit CMOS microcomputer chip having a processor section 111, associated ROM and NVRAM memory sections 112 and 114, and a suitable output circuit section 115. The card also bears a rechargeable battery 116 of suitable type such as a nickel-cadmium battery, and an associated charging circuit 118 for maintaining a proper state of charge in the battery. A CMOS real time clock 119 is provided, as is a suitable MICRO CHANNEL interface 120. As knowledgeable readers may recognize, the distribution of functions among the various elements described may be varied from that specifically stated while achieving the results to be here described.

In a typical installation as contemplated by this invention, the option card 110 may be mounted in any available slot 54 in the computer 10. The output circuit section 115 of the microprocessor 111 is appropriately connected with the logic level switch 101 of the power supply. One manner in which this may be done is by means of an accessory cable connected with the option card and also with the switch elements housing the electromechanical push member manipulated by an operator in activating the computer 10. In any event, the output circuit section 115 is put into parallel with the manual switch 100 so that the computer 10 may be activated or powered up by either an operator manipulating the manual switch or by the operation of the option card 110 as will be described. As will be understood, the mounting of the option card 110 in the slot 54 will provide an operative connection with other components of the computer 10 effective to provide charging current for the charging circuit 118 and to provide communication over the bus for program operation.

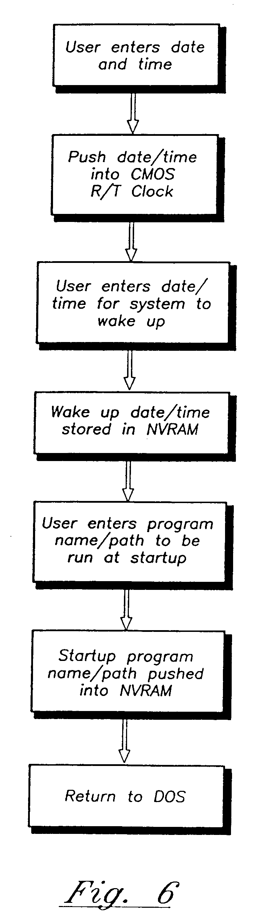

On mounting the option card 110, a program is run which provides the steps illustrated by the flowchart of Figure 6. In particular, an operator will enter the current date and time, and push that date and time information into the CMOS clock 112 of the option card. The operator will then enter information giving the date and time at which the computer 10 is to be activated or "wake up", and that information is stored in the option card NVRAM 114. The operator will then enter information giving the name and path designation as required for the program to be run unattended at the designated "wake up" time, and cause that information to be stored in the NVRAM 114. With that information having been stored, the setup program will return to the operating system, here indicated as being DOS.

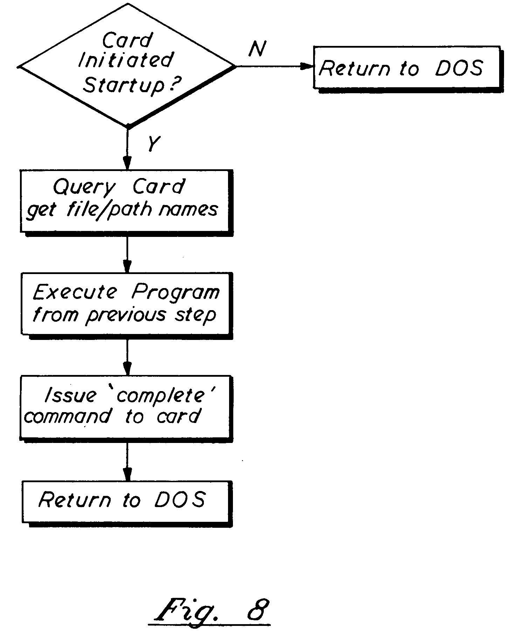

At some later time, the computer 10 will be deactivated or powered off, as when an operator may manually turn off the computer at the normal end of a normal day. Once the computer has been powered off, the option card 110, powered by the card mounted rechargeable battery, functions to run a relatively simple program illustrated by the flowchart of Figure 7. More specifically, the ROM based software on the card itself compares the current date and time information to be found in the card mounted clock 112 with the stored "wake up" information. When the two match (at "Yes" to the question "Time to turn on?"), the output circuit section is instructed to activate, powering up the computer 10, which then executes a normal boot sequence including execution of CONFIG.SYS and AUTOEXEC.BAT files which have been provided. A simple program Illustrated by the flowchart of Figure 8 is included in the AUTOEXEC.BAT file for determining whether the computer was powered up by an operator or the option card 110, for purposes described more fully hereinafter. The program of Figure 7, in the meantime, awaits the return from the computer 10 of a "complete" command.

While here described with particular reference to a clock as an event tracking element, the knowledgeable. reader will understand that other events may be identified and recognized. While the most preferred form of the Invention here described is oriented to time of day operation, it is recognized that other types of "calls" may be made and recognized for the "wake up" and operation of a microcomputer.

On activation of the computer 10, the small program stored in the appropriate location of the memory of the computer 10 and illustrated by Figure 8 first determines whether the power Lip or wake up came from manual operation of the power switch 100 or from the option card 110 by querying the card. A response indicating that the card 110 initiated activation results in another query for the file. name and path for execution, while a response indicating that the card did not initiate activation results in an assumption that activation resulted from operator manual action and causes a normal exit to the operating system, here DOS. Should the program fetch a file name and path (as stored in the card mounted NVRAM), then that program is executed. At the conclusion of execution of the program, a "complete" command is issued to the option card 110.

Reception of the "complete" command re-enters the sequence of Figure 7 and causes, after a selected delay, deactivation of the output circuit to turn off or power down the computer 10.

While the invention has been here described as embodied in an option card to be added to a personal computer, the knowledgeable reader will understand that the control system may also be incorporated on the planar or motherboard of such a computer.

In a second embodiment of the invention the computer 10 may be activated to a power-on state, perform as a network server, and be restored to a deactivated, dormant power-off state all while unattended by an operator. This is accomplished through the provision of an network option card mounted in one of the MICRO CHANNEL connectors or slots 54 as will now be described.

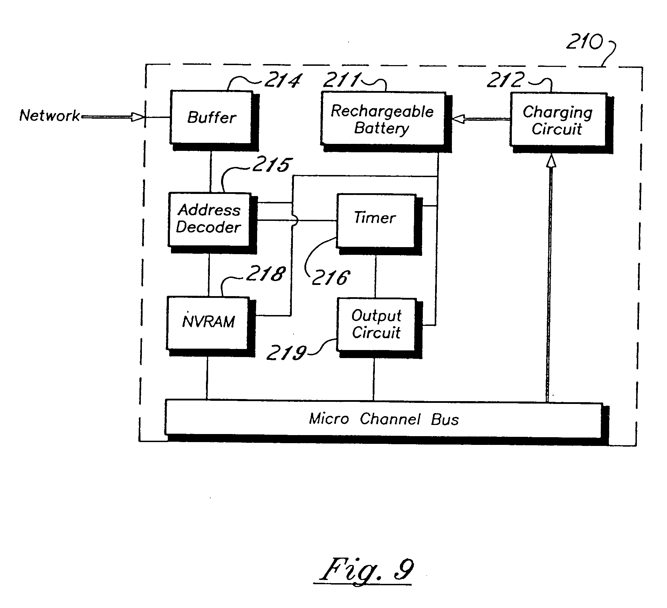

Figure 9 illustrates a form of network option card 210 particularly designed for use with a MICRO CHANNEL personal computer. However, knowledgeable readers will understand from the description which here follows that the invention may also be embodied in option cards usable with the Family I or AT bus architecture. or, for that matter, with still other types of computers used as network servers. Network option cards are available to adapt a personal computer to a number of differing network schemes, including those known as Token Ring, Ethernet, and Token Bus. While the present invention will be. here disclosed with particular reference to an Ethernet adapter or option card, it will be understood that the principles here described can be adapted to various network schemes and thus are not to be understood as being restricted to only one scheme.

The option card 210, in a preferred form, bears a rechargeable battery 211 of suitable type such as a nickel-cadmium battery, and an associated charging circuit 212 for maintaining a proper state of charge in the battery. The battery 211 provides power for the operation of an input buffer 214 and address decoder 215 (as may be conventionally supplied on a network option card) during intervals when the associated server system 10 is dormant. The battery 211 also provides power to an inactivity timer 216, NVRAM memory elements 218 and an output circuit 219 which is connected by an appropriate means with the logic operated switch 101 of the power supply of Figure 3. The output circuit may be connected, by way of example, by an appropriate cable bypassing the I/O bus of the server system 10 (which would be unavailable during dormancy of the system). In the event that the power supply of the computer 10 is provided with a portion which maintains the availability of a suitable logic level voltage even while the computer is "off", then the battery 211 may be dispensed with and the NVRAM replaced by any suitable RAM devices powered from the power supply.

In a typical installation as contemplated by this invention, the option card 210 may be mounted in any available slot 54 in the computer 10. The output circuit 219 of the card 210 is appropriately connected with the logic level switch 101 of the power supply so as to be put into parallel with the manual switch 100 so that the computer 10 may be activated or powered up by either an operator manipulating the manual switch or by the operation of the option card 210 as will be described. As will be understood, the mounting of the option card 210 in the slot 54 will provide an operative connection with other components of the computer 10 effective to provide charging current for the charging circuit 212 and to provide communication over the bus for program operation.

In an Ethernet network, data is moved in "datagrams", a self contained packet, independent of other packets, that carries information sufficient for routing from the originating data terminal equipment (DTE, usually a LAN station personal computer in the environment particularly contemplated by this invent.ion) to the destination DTE without relying on earlier exchanges between the DTEs and the network. In the environment particularly contemplated by this invention, the delivery of a datagram to the dormant server is recognized by the address decoder 215 which functions as an event tracking element for registering the occurrence of that event, namely the datagram delivery. The address decoder 215 passes the datagram to the NVRAM memory elements 218 to be held there pending activation of the server system 10 and also activates the timer 216 and output circuit 219. When activated, the timer 216 begins to time the interval of permitted operation for the server system 10, and the output circuit 219 cooperates with the system power supply 90 to activate, power-on or "wake-up" the server system 10. As the server system awakes, the datagram stored in the NVRAM 218 on the card is delivered and the requested exchange or access begins. For so long as datagrams continue to pass through the card 210 which include the server address, the address decoder 215 will continue to reset the timer 216 and maintain activation of the server system. At the end of the predetermined time interval after the. passage of the last such datagram, the timer 216 "times out" and the server system 10 is deactivated, powered down, and rendered dormant. The interval timed by the timer 216 may be set by software or manually by switches provided on the card 210. Setting the time interval to zero will effectively disable the present invention and permit operation with a network option card in accordance with this invention in a manner as if the feature of this invention was absent.

It should be noted that the control system will be essentially transparent to a client user on a network. That is, beyond any potential delay in the server system 10 booting up and responding to the client request which functions as a "wake up call", the user of a client personal computer will be unaware that the server has been dormant or returns to dormancy after use, even with that server system being unattended.

## Claims

1. Control system for a computer of a type having a power supply which includes a controllable component for activating and deactivating the computer by enabling and disabling the supply of electrical power thereto, the control system comprising:

    memory elements (114, 218) for storing information regarding an event on the occurrence of which the computer is to be activated and regarding functions to be performed by the computer while activated; and an activation controlling element (111, 215) operatively coupled with the memory elements and arranged to identify the occurrence of the event and, on identification thereof, to cause the controllable component to activate the computer, to initiate performance of the functions and, after completion of the functions to cause the controllable component to deactivate the computer.

2. A control system as claimed in Claim 1 comprising a power source (116, 211), functioning independently of the power supply of the computer, for supplying operating power to the control system during inactivity of the computer.

3. A control system as claimed in Claim 2 wherein the power source (116, 211) is a rechargeable battery, the system including a charging circuit (118, 212) for recharging the battery during activity of the computer.

4. A control system as claimed in any preceding claim wherein the event is the arrival of a predetermined time, the system including a clock (119) for registering the passage of time operatively coupled to the activation controlling element (111, 215).

5. A control system as claimed in any preceding claim wherein the information regarding the functions is in the form of instructions for the operation of the computer, the activation controlling element initiating performance of the functions by transferring the instructions to the computer.

6. A control system as claimed in any of Claims 1 to 3 for a network server computer, wherein the event is the arrival of a datagram addressing the server computer, the control system comprising an address decoder (215) for recognising the receipt from the network of a datagram addressing the server computer.

7. A control system as claimed in Claim 6 wherein the information regarding functions to be performed by the computer are requests for client service, said requests being transferred to the computer upon activation thereof.

8. A control system as claimed in Claim 6 or Claim 7 comprising an inactivity timer (216) for timing an interval of inacivity during which signal exchange between the server computer and the network are absent, the activation controlling element being responsive to the inactivity timer to deactivate the computer upon the. passing of a predetermined interval of inactivity.

9. A control system as claimed in any preceding claim in the form of an option card (110, 210) for a computer having expansion slots (20,54) for receiving such cards.

10. A computer for use with a control system as claimed in any of Claims 1 to 5, the computer including means for ascertaining, on activation of the computer, whether the activation occurred by operation of the control system and means for querying the control system for stored instructions in the event that activation occurred by operation of the control system, the computer awaiting operator instructions if activation occurred other than by operation of the control system.

11. A computer including a control system as claimed in any of Claims 1 to 9.

12. An option card for mounting in an expansion bus slot of a microcomputer and operative coupling to a controllable power supply of the microcomputer for controllably activating and deactivating the microcomputer and for directing the function of the microcomputer while activated by said card, said card comprising:

    memory elements for storing information regarding a time on the occurrence of which the microcomputer is to be activated and function and for storing instructions for the operation of said data processing and storage components to be performed by the microcomputer while activated,

    a clock for registering the passage of time, and

    a microprocessor operatively coupled with said memory elements and said clock for identifying the arrival of the time at which the microcomputer is to be activated, activating the microcomputer, transferring the stored instructions to said data processing and storage components and initiating the functions to be performed, and deactivating the microcomputer upon performance. of the functions, and

a card power source functioning independently of said power supply for supplying operating power for said memory elements, said clock and said microprocessor during dormancy of said microcomputer.

13. A network option card for mounting in an expansion bus slot of a server microcomputer and operative coupling to a controllable power supply of the microcomputer for activating and deactivating the microcomputer and for directing the function of the microcomputer upon activation by said card, said card comprising:

memory elements for storing information regarding an event on the occurrence of which the microcomputer is to be activated and function and regarding functions to be performed by the microcomputer while activated,

an event tracking element for registering the occurrence of an event, and

an activation controlling element operatively coupled with said memory elements and said tracking element for identifying the occurrence of the event on which the microcomputer is to be activated, and activating the microcomputer.

14. A method of enabling unattended operation of a microcomputer having electrically powered data processing and storage components for processing and storing digital data, a data signal transferring bus including at least one option card receiving slot for establishing communication between an option card removably mounted in the slot and the data processing and storage components, a power supply switchable to activate and deactivate the data processing and storage components, and a controlling option card mounted in the slot, the method comprising the steps of:

storing on the card information regarding an event on the occurrence of which the microcomputer is to be activated and function and regarding functions to be performed by the microcomputer while activated,

registering on the card the occurrence of the event at which the microcomputer is to be activated,

identifying on the card the occurrence of the event on which the microcomputer is to be activated,

activating the microcomputer from the card upon the identification of the occurrence of the event,

initiating from the card the functions to be performed, and

deactivating the microcomputer from the card upon performance of the functions.

Fig. 1

Fig. 2

MATH COPROCESSOR 39

MICRO PROCESSOR 32

CACHE 41

CACHE CONTROLLER 40

BUFFER 44 42

BUS CONTROL TIMING 35 34

LATCH BUFFER / DECODER 68

DISPLAY ADAPTER 70

DISKETTE ADAPTER 56

CMOS RAM 74

CMOS CLOCK 72

PARALLEL ADAPTER 78

TIMER 80

ROM 64

INTERRUPT CONTROLLER 84

RS232 ADAPTER 76

69

DMA CONTROLLER 50 / CENTRAL ARBITER 49 48

BUFFER 51

I/O SLOT 54

I/O SLOT 54 52

CONTROL (RAS, CAS DECODE) 59 / ADDRESS MUX 60 / DATA BUFFER 61

DRAM SIP 38

DRAM SIP 65

DRAM SIP 66

DRAM SIP 67

36

55

Fig. 3

12

_Fig. 4_

*Fig. 5*

*Fig. 7*

User enters date
and time

⇓

Push date/time
into CMOS
R/T Clock

⇓

User enters date/
time for system to
wake up

⇓

Wake up date/time
stored in NVRAM

⇓

User enters program
name/path to be
run at startup

⇓

Startup program
name/path pushed
into NVRAM

⇓

Return to DOS

*Fig. 6*

Fig. 8

*210*

Network

*214*   *211*   *212*

Buffer

Rechargeable Battery

Charging Circuit

*215*

Address Decoder

Timer

*216*

*218*

NVRAM

Output Circuit

*219*

Micro Channel Bus

*Fig. 9*